# EUROPEAN PATENT SPECIFICATION

(11) **EP 2 100 262 B1**
(45) Date of publication and mention of the grant of the patent: **22.05.2013**
(21) Application number: 07860638.1
(22) Date of filing: 17.12.2007
(51) Int. Cl.: G06K 7/10

(54) **RADIO FREQUENCY IDENTIFICATION READER FOR DETACHING MOBILE TERMINAL**
RFID-LESEGERÄT FÜR ABNEHMBARES MOBILES ENDGERÄT
LECTEUR D'IDENTIFICATION PAR RADIOFRÉQUENCE POUR TERMINAL MOBILE AMOVIBLE

(30) Priority: 18.12.2006 KR 20060129091; 18.12.2006 KR 20060129092
(43) Date of publication of application: 16.09.2009
(73) Proprietor: Bluebird Soft Co., Ltd., Gangnam-gu Seoul 135-964 (KR)
(72) Inventor: AN, Hyun woo, Seoul 138-838 (KR)
(74) Representative: Strobel, Wolfgang
(86) International application number: PCT/KR2007/006600
(87) International publication number: WO 2008/075868

(56) References cited:
- WO-A1-2005/008575
- DE-U1-202004 004 945
- KR-A- 20010 079 638
- US-B1- 6 708 887
- US-B1- 6 916 128
- US-B2- 6 999 797
- Lava Company: "RFID" website vol. 6, no. 4, June 2004 (2004-06), XP002590093 Retrieved from the Internet: URL:http://www.lavalink.com/fileadmin/news letters/link_06.04.pdf [retrieved on 2010-07-01]
- ANONYMOUS: "IDENTEC SOLUTIONS Introduces RFID Reader in Compact Flash Format with 300-foot Read Range" website 14 February 2006 (2006-02-14), XP002590094 Retrieved from the Internet: URL:http://www.morerfid.com/details.php?su bdetail=Report&action=details&report_id=12 75&display=RFID [retrieved on 2010-07-01]

## Description

### Technical Field

The present invention is directed to a radio frequency identification (RFID) reader to which a mobile terminal can be connected, and more specifically, to an RFID reader to which a mobile terminal such as a personal digital assistant is connectable and which is portable and easy to operate and have an efficient structure.

### Background Art

Generally, mobile terminals including can be used freely without spatial limitation while users are moving and typical types of such mobile terminals include mobile communications terminals, such as mobile phones, and personal digital assistants (PDAs). Thus, although a term of a mobile terminal which is used in this specification includes such all kinds of devices, hereinafter, only a PDA will be described for convenience of explanation.

As a society becomes more complicated and diverse, an individual needs to store and maintain their own information more and more, and a variety of products for satisfying these individual s needs are available in markets, and a PDA is one of the widely used mobile terminal products.

A PDA is also called a pocket computer, which is a general term for a device of a palm size with calculation, information storing, and searching functions which is used for personal or business purposes, and is generally used to maintain schedule calendar and address information.

Particularly, an industrial PDA has been more widely used with the development of physical distribution industry and its market has expanded gradually.

The industrial PDA has various businesslike functions, such as a barcode scanner and a credit card settlement function, which are not provided by a general PDA, and allows efficient management of delivery, database, and relevant work. For example, a consultant of an insurance company can directly and immediately manage a variety of insurance related works such as client information management, client search, schedule management, daily consulting record management, search of anniversaries of clients, and funds statement management, using such the industrial PDA. For another example, medical staff can input or search medical record, history and medical treatment of a patient and an X-ray image or graphic data of the patient using the industrial PDA, which the medical staff is carrying, without temporal and spatial restrictions. Also, when patrol or traffic police officers are on outside duty, the police officers can assist a traffic offender to make a payment simultaneously utilizing an industrial PDA when the offender is charged a fine, for which it generally takes the offender two or three days to pay. Hence, hours for outside duty of the police officers can be substantially reduced.

Radio frequency identification is a general term for a technology of processing information of items by using a compact semiconductor chip. More specifically, the RFID technology enables a non-contact recognition system which transmits information of a product and peripheral information of the product using a compact chip, which is attached to a variety of products.

A radio frequency identification system, which includes a reader having reading and decoding functions, an RFID tag including unique information, operation software, and a network, processes information by identifying a thin flat tag fixed to an item.

An RFID tag consists of a semiconductor transponder chip and an antenna, and is categorized into a passive type and an active type. While a passive RFID tag operates by energies provided from a frequency signal of a reader without an internal power source, an active RFID tag has a built-in RF tag battery for self-operation. An RFID tag may be categorized into a silicon-semiconductor chip tag and a non-chip tag which is formed of only an LC element and a plastic or polymer element.

The RFID technology does not need to directly contact or scan an item within a visible band of a reader like in a barcode technology. Having such advantages, the RFID technology is considered as a replacement for a barcode technology, and an application range of the technology expands. A low-frequency (30 kHz 500 kHz) RFID system is used for transmission in a short distance of less than 1.8 m, and a highfrequency (850 MHz 950 MHz or 2.4 GHz 2.5 GHz) RFID system is used for transmission in a long distance of more than 27 m.

Since the RFID tags are widely used for a variety of management systems for, for example, processing management, asset management, physical distribution management, stock management, access control, product tracking, and cultural property protection, researches on an RFID reader adopting the RFID technology have recently been conducted actively, and various types of RFID readers are commercially available. The available RFID readers are categorized from a portable RFID reader applied to an industrial PDA to a fixed RFID reader which is used being fixed onto a table, and its application range is expanding.

However, when the RFID reader function is integrated into a PDA, the size of the PDA becomes bigger than a normal one, thereby causing inconvenience to a user who wants to simply use a PDA. On the other hand, since the fixed RFID reader cannot be carried with a user, the user only can use the fixed RFID reader in a particular place where the RFID reader is available.
Therefore, if an RFID reader to which a PDA can be connected is developed, considering the situation that the PDA is widely used in most industrial fields, it can be expected that a variety of management systems can be more efficiently operated by using such the RFID reader.
For easy use of such the RFID reader, the RFID reader needs to have a pocket portion which the PDA is easily connected to (locked into) and detached (unlocked) from. However, it is certain that the PDA connected to the pocket portion should not be arbitrarily detached from the pocket portion. Hence, it is required to conduct a research on a structure of a RFID reader, which allows a PDA to be easily connected to and detached from a pocket portion, in the course of researching and developing the RFID reader.
US 6 999 797 B2 discloses a removable grip for a mobile terminal which may include a RIFD tag reader having a bar code reading module. The grip can be connected to the RIFD reader and supports the RIFD reader. Furthermore, a switch unit is connected to the grip for actuating the bar code reading module.
It is the object of the present invention to provide a radio frequency identification (RFID) reader showing means for easily and quickly selectively locking and unlocking the mobile terminal in and from a pocket portion.
According to the invention a radio frequency identification (RFID) reader on which a mobile terminal can be mounted is provided, the RFID reader comprising: a reader body; a RFID reading portion which forms a front of the reader body and includes a RFID module which reads information in a RFID tag by being placed close to the RFID tag; a grip portion which is connected to the reader body in a rear of the RFID reading portion, which supports the reader body and to which a switching unit is connected that selectively turns on and off operation of the RFID module; and a control unit which outputs the information of the RFID tag read by the RFID module to the mobile terminal according to operation of the switching unit; said reader body which includes a top plate to which a pocket portion is detachably connected to, having an end to which a top of the grip portion is connected to and which is flat, wherein said pocket portion being connected to a top of the reader body and includes a connection terminal portion which is connectable with a terminal portion of the mobile terminal and is formed on an inner side of the pocket portion; and a locking portion which is provided in at least one of the top plate and the pocket portion and selectively locks and unlocks the mobile terminal in and from the pocket portion wherein the locking portion includes at least one locking slot which is formed at the pocket portion, and a locker which is provided in a manner that the locker can pivot in at least one direction, said locker having an end that passes through the locking slot and is exposed to the inside of the pocket portion.

### Brief Description of the Drawings

FIG. 1 shows a radio frequency identification (RFID) reader to which a mobile terminal is mounted, according to an embodiment of the present invention;
FIG. 2 is a perspective view of the RFID reader in FIG. 1 from a different angle;
FIG. 3 is a front view of the RFID reader in FIG. 2;
FIG. 4 is a projected side view of the RFID reader in FIG. 2 to schematically show inner parts;
FIG. 5 is a front perspective view of a pocket portion of the RFID reader in FIG. 2, from which an elastic projection portion is removed;
FIG. 6 is a rear perspective view of the pocket portion of the RFID reader in FIG. 2, from which a printed circuit board (PCB) is removed;
FIG. 7 is a front perspective view of a top plate of a reader body in FIG. 2;
FIG. 8 is a partly enlarged, exploded perspective view of the top plate in FIG. 7;
FIG. 9 is a perspective view of a locker illustrated in FIG. 8 from a different angle;
FIG. 10 is an enlarged view of a stalker illustrated in FIG. 8;
FIG. 11 is a cross-sectional view of a locker and stalker in FIG. 8 in order to schematically explain movements of the locker and stalker;
FIG. 12 is a front perspective view of a gasket of the RFID reader in FIG. 2;
FIG. 13 is a rear perspective view of the gasket of FIG. 12;
FIG. 14 is a rear perspective view of the top plate of FIG. 7; and
FIG. 15 is a schematic cross-sectional view of a pogo pin area of an auxiliary PCB illustrated in FIG. 6.

The present invention is described in detail in the detailed description and the accompanying drawings. In the specification, like reference numerals in the drawings denote like elements.

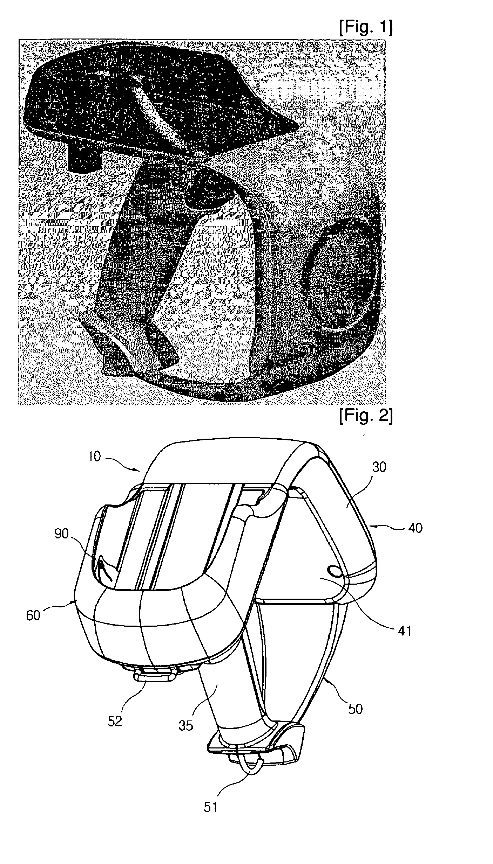

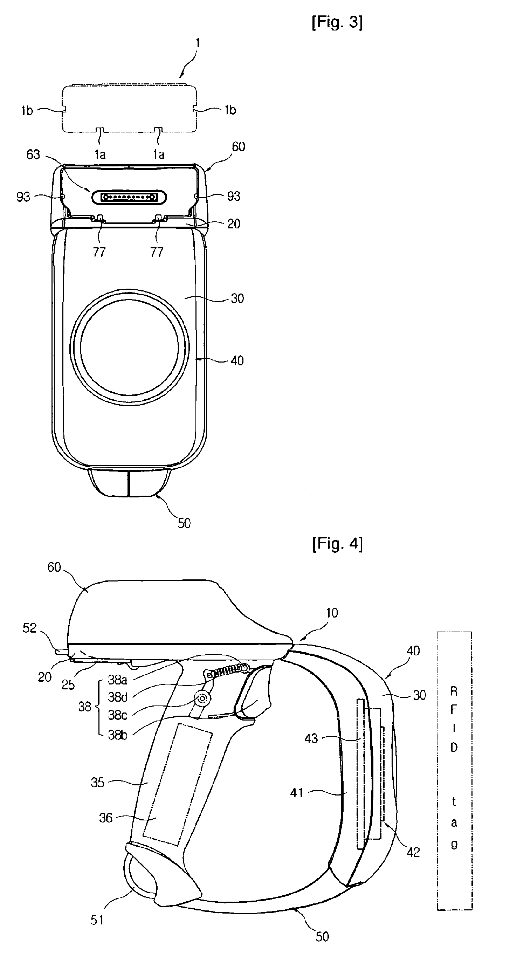

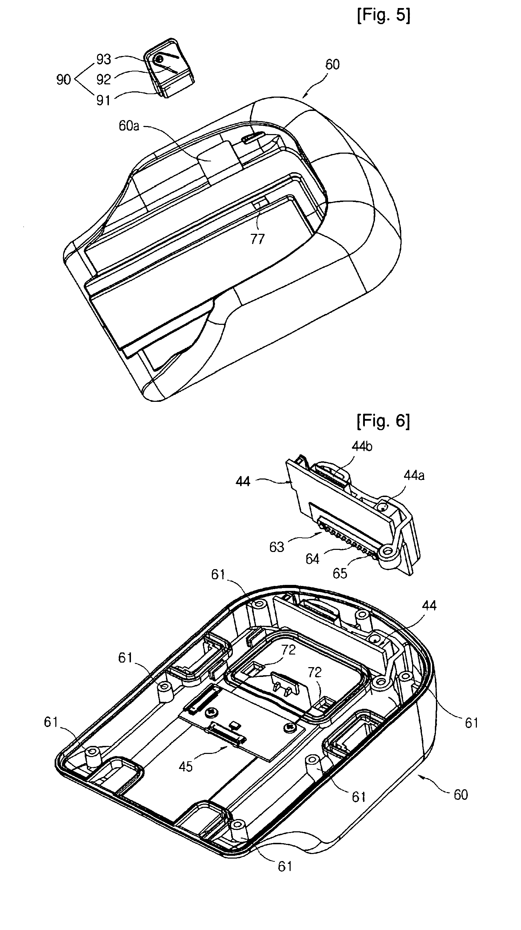

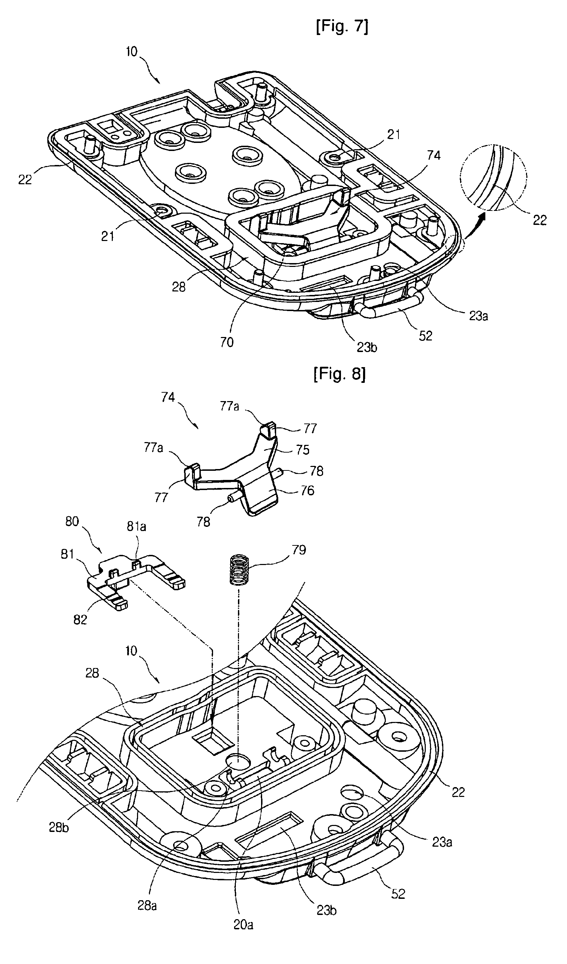

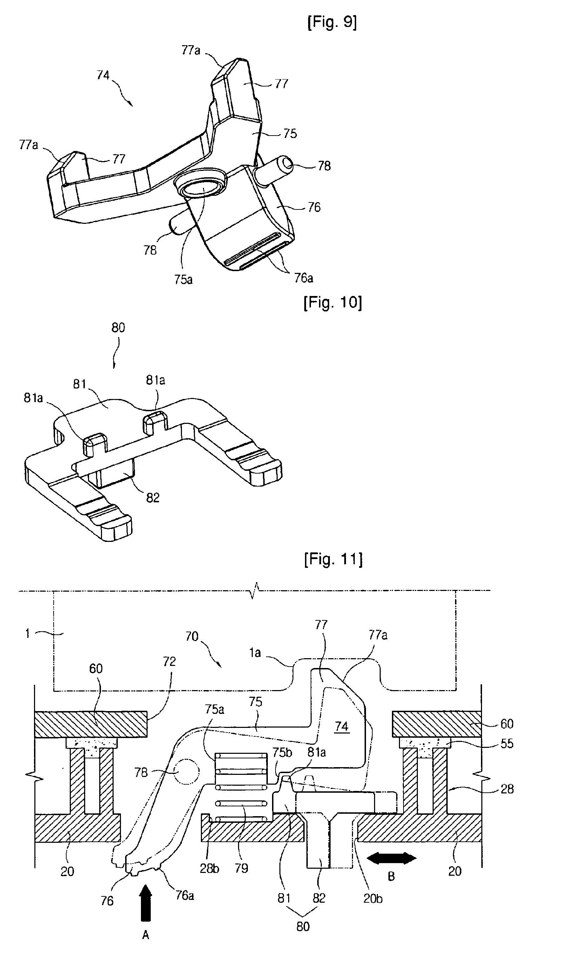

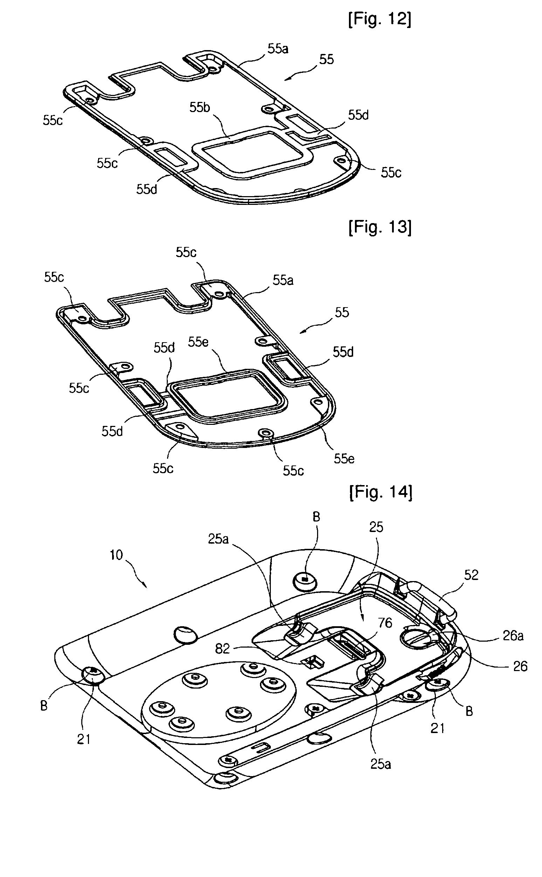

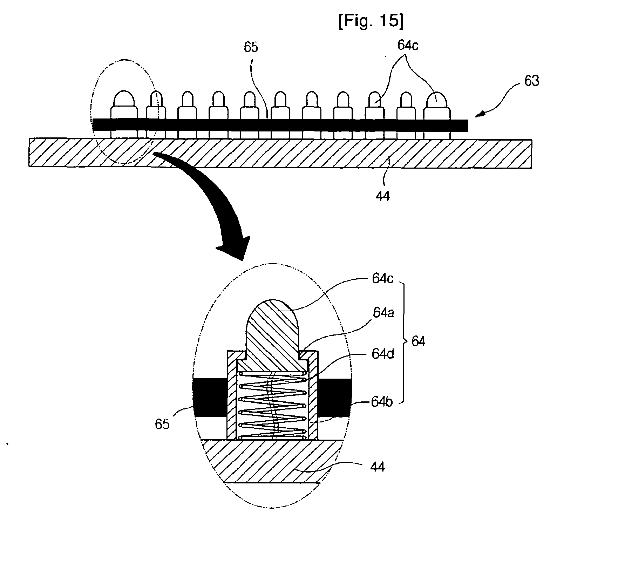

FIG. 1 shows a radio frequency identification (RFID) reader to which a mobile terminal is attached, according to an embodiment of the present invention, FIG. 2 is a perspective view of the RFID reader in FIG. 1 from a different angle, FIG. 3 is a front view of the RFID reader in FIG. 2, and FIG. 4 is a projected side view of the RFID reader in FIG. 2 to schematically show inner parts. FIG. 5 is a front perspective view of a pocket portion 60 of the RFID reader in FIG. 2, from which an elastic projection portion is removed, and FIG. 6 is a rear perspective view of the pocket portion 60 of the RFID reader in FIG. 2, from which a printed circuit board (PCB) is removed. FIG. 7 is a front perspective view of a top plate 20 of a body 10 of the RFID reader in FIG. 2, FIG. 8 is a partly enlarged, exploded perspective view of the top plate 20 in FIG. 7, FIG. 9 is a perspective view of a locker 74 illustrated in FIG. 8 from a different angle, FIG. 10 is an enlarged view of a stalker 80 illustrated in FIG. 8, and FIG. 11 is a cross-sectional view of a locker and stalker in FIG. 8 in order to schematically explain movements of the locker 74 and stalker 80. FIG. 12 is a front perspective view of a gasket of the RFID reader in FIG. 2, and FIG. 13 is a rear perspective view of the gasket of FIG. 12. FIG. 14 is a rear perspective view of the top plate 20 of FIG. 7, and FIG. 15 is a schematic cross-sectional view of a pogo pin area of an auxiliary PCB illustrated in FIG. 6.

Referring to these drawings, especially to FIGS. 1 to 4, a RFID reader to which a mobile terminal can be connected, according to the present invention, includes a reader body 10 which forms a general shape of the RFID reader, an RFID reading portion 40 which forms the front part of the RFID reader and includes an RFID module 42 (referring to FIG. 4), a pocket portion 60 (referring to FIGS. 5 and 6) which is connected to a top of the reader body 10 and a mobile terminal is connected to, a grip portion 35 which is placed at the rear of the RFID reading portion 40 and has a switching unit 38 on its one side in order to selectively turn on and off the operation of the RFID module 42, and a control portion (not shown) which outputs information to the mobile terminal according to the operation of the switching unit 38, the information being stored in an RFID tag and read by RFID module 42.

The RFID reader according to the current embodiment of the present invention is used while an additional mobile terminal is connected to the RFID reader. Thus, a mobile terminal is required in order to use the RFID reader according to the embodiment of the present invention, and such the mobile terminal may be a mobile phone or an industrial or general personal digital assistant (PDA) of any types of shape such as a flip open type and a folder type. In this specification, however, a flip open type industrial PDA 1 (referring to FIGS. 3 and 11) will be described as the mobile phone, hereinafter.

The reader body 10 has the pocket portion 60, which is detachably connected thereto, a top plate 20 (referring to FIGS. 7 and 14) to which a top of the grip portion 35 is connected, and a front plate 30 which forms the front of the RFID reading portion 40.

As illustrated in FIGS. 7 and 14, the top plate 20 is substantially flat shaped, whereas the front plate 30 is curved as illustrated in FIGS. 2 and 4. However, the shapes of the plates according to the present invention are not limited thereto.

Referring to FIGS. 1 to 4 again, the RFID reading portion 40 forms a front part of the reader body 10. The RFID reading portion 40 includes the RFID module 42 (referring to FIG. 4) which reads information in an RFID tag (referring to FIG. 4) while placing near the RFID tag to be read. A main printed circuit board (PCB) 43 is connected to the RFID module 42.

The main PCB 43 forms a signal line, which connects the RFID module 42 and a PDA 1, by electrically connecting with an auxiliary PCB 44 (referring to FIG. 6) and a connection PCB 45, respectively, through flexible PCBs (FPCB; not shown).

A module supporting cover 41, which accommodates and supports the main PCB 43 and the RFID module 42 together with the front plate 30, is connected to a rear part of the front plate 30 such that the main PCB 43 and the RFID module 42 can be mounted on the rear of the front plate 30. The module supporting cover 41 may be detachably connected to the rear of the front plate 30 for the maintenance of the module supporting cover 41.

Although it is not illustrated in detail, a structure that allows the module supporting cover 41 to be detachable from the rear of the front plate 30 can be simply implemented by a hook connection and a bolt connection. It might be advantageous that an additional rubber packing is provided between the module supporting cover 41 and the front plate 30 in order to prevent foreign substance or moist from entering a space between the module supporting cover 41 and the front plate 30 after the module supporting cover 41 and the front plate 30 are coupled with each other.

In a lower part of the module supporting cover 41, that is, a lower part of the reader body 10, a connection portion 50 is further included, which has an end that is connected between the front plate 30 and the module supporting cover 41 and the other end that is connected to a lower part of the pocket portion 60, to form a lower part of the reader body 10. The connection portion 50 also supports the RFID reading portion 40 and the pocket portion 60 by connecting the RFID reading portion 40 and the pocket portion 60. In the current embodiment of the present invention, the connection portion 50 is arc-shaped. However, the shape of the connection portion 50 is not limited to an arc-shape. Furthermore, the connection portion 50 may be omitted depending on a design of the RFID reader.

A connection ring 51 is formed on the connection portion 50. A connection ring 52 (referring to FIGS. 2, 7, and 8) is also formed on a front of the top plate 20. The connection rings 51 and 52 is used for hanging the RFID reader on a certain place or holding the RFID reader using a neck string on a user's neck. The connection rings 51 and 52 can be omitted depending on a design of the RFID reader, and can be provided on parts different from what has been described above.

The pocket portion 60 is where the PDA 1 is connected. Thus, the pocket portion 60 has various structural elements such that the PDA 1 is firmly locked into and unlocked from the pocket portion 60 while not being easily loose. Such the elements will be described later.

The pocket portion 60 is connected to an upper part of the reader body 10. More specifically, the pocket portion 60 is connected to the top plate 20 of the reader body 10, which forms the upper part of the reader body 10. To this end, a plurality of coupling holes 21 are formed on the top plate 20, and a plurality of coupling bosses 61, which bolts B (referring to FIG. 14) that pass through the coupling holes 21 are inserted into so that the coupling bosses 61 and the coupling holes 21 are coupled with one another, are formed on the pocket portion 60. Therefore, while the coupling holes 21 of the top plate 20 and the coupling bosses 61 of the pocket portion 60 are connected to one another, the bolts B are inserted into the coupling bosses 61 through the coupling holes 21 so that the pocket portion 60 can be fixed onto a top surface of the top plate 20. To prevent a gap between the pocket portion 60 and the top plate 20 before the pocket portion 60 and the top plate 20 are coupled together, a gasket 55 (referring to FIGS. 12 and 13) are interposed between the pocket portion 60 and the top plate 20.

The gasket 55 is interposed between the top plate 20 and the pocket portion 60 in order to seal a space between the top plate 20 and the pocket portion 60, as shown in FIGS. 12 and 13. Thus, the gasket 55 prevents moist or water from entering the space between the top plate 20 and the pocket portion 60.

To this end, the gasket 55 is designed as a single unit that wholly covers outlines of the top plate 20 and the pocket portion 60 and an area where the top plate 20 and the pocket portion 60 are coupled together facing each other. More specifically, the gasket 55 includes an outline part 55a that is placed on the outlines of the top plate 20 and the pocket portion 60, a unit outline part 55b that is placed on the outline of a locker connecting portion 28, which will be described later, a plurality of connecting parts 55c that are placed on areas of the coupling holes 21 and coupling bosses 61, and dummy parts 55d that are placed on other areas where the top plate 20 and the pocket portion 60 contact each other.

A surface of the gasket 55, which a bottom of the pocket portion 60 touches, is flat, whereas another surface of the gasket 55, which the top plate 20 touches, has a plurality of projection ribs 55e which are inserted and fixed into grooves 22 (referring to FIGS. 7 and 8) formed on each part of the top plate 20. Since the grooves 22 are formed on every part of the top plate 20 including an outline, it may be advantageous that the projection ribs 55e are also formed on the outline part 55a, the unit outline part 55b, the connecting parts 55c and the dummy parts 55d of the gasket 55. Moreover, it is more advantageous that the outline part 55a, the unit outline part 55b, the dummy parts 55d, the connecting parts 55c, the dummy parts 55d and the projection ribs 55e of the gasket 55 are formed of the same material. The material may be rubber or silicon.

The pocket portion 60 is box-shaped with its top and one side open in order to have the PDA 1 connected into. Hence, the PDA 1 can be connected with the pocket portion 60, partly accompanied in the pocket portion 60. A rear side of the pocket portion 60, with respect to a direction in which the PDA 1 is inserted, has a connection terminal portion 63 (referring to FIGS. 6 and 15), which is electrically connected to terminals (not shown, data terminal portion) of the PDA 1.

Referring to FIG. 15, the connection terminal portion 63 includes a plurality of pogo pins 64, which are coupled with the auxiliary PCB 44 and correspond to the terminals of the PDA 1 one by one, and a pin supporting block, which supports all the plurality of pogo pins 64 on the auxiliary PCB 44.

Each of the pogo pins 64 has an end which is connected to the auxiliary PCB 44, and another end which has a hollow-shaped pin accommodating part 64b, which an exposing hole 64a is formed on, a pin 64c that is partly accommodated in the pin accommodating part 64b so as to be exposed through the exposing hole 64a of the pin accommodating part 64b, and an elastic member 64d that is placed in the pin accommodating part 64b between a bottom surface of the pin 64c and the auxiliary PCB 44 and elastically biases the pin 64c in a direction in which the pin 64c is exposed.

The bottom surface of the pin 64c which contacts the elastic member 64d has a diameter greater than that of a top of the pin 64c in order to prevent the pin 64c from coming off from the exposing hole 64a of the pin accommodating part 64b, and an inner diameter of the pin accommodating part 64b is nearly the same as an outer diameter of the bottom surface of the pin 64c and an inner diameter of the exposing hole 64a is almost the same as an outer diameter of the top of the pin 64c so that the pin accommodating part 64b corresponds to the shape of the pin 64c. As the result, each pin 64c is pushed in a direction of the exposing hole 64a by the elasticity of the elastic member 64d, but does not come off from the exposing hole 64a. Thus, the pins 64c can be strongly connected with the terminals of the PDA 1, thereby preventing an electrical short.

The auxiliary PCB 44 to which the connection terminal portion 63 is connected, as shown in FIG. 6, has a power supplying terminal portion 44a and a USB (universal serial bus) terminal portion 44b connected thereto. In this case, the power supplying terminal portion 44a and the USB terminal portion 44b, as shown in FIG. 8, are exposed to outside by a first terminal exposing hole 23a and a second exposing hole 23b, respectively. However, if the power supplying terminal portion 44a and the USB terminal portion 44b are always exposed by the first and second terminal exposing holes 23a and 23b, they can be easily contaminated by foreign material. To prevent such the contamination, a terminal cover 25 is formed on the bottom surface of the top plate 20, which the first and second terminal exposing holes 23a and 23b are formed on, as shown in FIG. 14. The terminal cover 25 has a side having hinge portions 25a formed thereon, and opens and covers a side of the top plate 20, where the first and second terminal exposing holes 23a and 23b are formed, by pivoting on the hinge portions 25a as a rotation axis. In FIG. 14, the terminal cover 25 covers the bottom surface of the top plate 20. However, when the terminal cover 25 pivots on the hinge portions 25a, the terminal cover 25 opens the first and second terminal exposing holes 23a and 23b on the top plate 20 so that the power supplying terminal portion 44a and the USB terminal portion 44b are exposed by the first and second terminal exposing holes 23a and 23b.

At this time, to prevent the terminal cover 25 from easily pivoting, the bottom surface of the top plate 20 where the terminal cover 25 is placed has a stop-knob 26 which selectively restricts the pivoting of the terminal cover 25. The stop-knob 26 selectively restricts the pivoting of the terminal cover 25 using a projection terminal 26a formed on its side by rotating together with the bolt forward and reversely.

Referring to FIG. 4 again, the grip portion 35 is formed on the RFID reader so that a user can easily carry and use the RFID reader. As described above, the grip portion 35 is connected to the rear of the RFID reader 40 to support the reader body 10, and has the end to which the switching unit 38 is connected to selectively turn on/off the operation of the RFID module 42. Moreover, a changeable battery 36 is further included inside of the grip portion 35. To change the changeable battery 36, like the RFID reading portion 45 described above, the grip portion 35 has a structure by which it can be detachable by a rear cover (not shown).

The switching unit 38 is placed at the front of the grip portion 35 when a user is holding the grip portion 35. The switching unit 38 is placed to be exposed from a side of the grip portion 35, as schematically illustrated in FIG. 4, and includes a press button portion 38b which pivots on a pivot axis 38a on its side, a module operating portion 38c which operates the RFID module 42 based on the pivoting of the press button portion 38b, and a reverting spring which is connected to the press button portion 38b and reverts the press button portion 38b to the original position. By these elements, when a user is holding the grip portion 35 entirely and presses the press button portion 38b with a finger, the press button portion 38b pivots on the pivot axis 38a to operate the module operating unit 38c, so that the RFID module 42 is operated. When the user releases the press button portion 38b, the press button portion 38b is reverted to the original position by the reverting spring 38d.

As described above, the pocket portion 60 formed on the top f the reader body 10 is where the PDA 1 is connected. Hence, the pocket portion 60 has various elements that firmly locks and unlocks the PDA 1 while preventing the PDA 1 from loosening from the pocket portion 60. With reference to FIGS. 3, and 5 to 11, such the elements will be described in detail below.

A locking portion 70 (referring to FIG. 7) which selectively locks and unlocks the PDA 1 that is connected to the pocket portion 60 is formed on the top plate 20 and the pocket portion 60 in order that the PDA 1 is firmly connected to the pocket portion 60 and easily detached from the pocket portion 60.

The locking portion 70 is coupled with a plurality of locking slots 72 (referring to FIG. 6), which are formed on the bottom surface of the pocket portion 60, and the top plate 20 such that the locking portion 70 can pivot at least in one direction. Also, the locking portion 70 includes a locker 74 (referring to FIGS. 8, 9, and 11) which has an end exposed to the bottom surface of the top plate 20 and the other ends each of which passes through the locking slot 72 to be exposed to the inside of the pocket portion 60.

Each locking slot 72 penetrates the bottom surface of the pocket portion 60. In the current embodiment of the present invention, there is a pair of locking slots 72 apart from each other on the bottom surface of the pocket portion 60.

The locker 74 is connected to the inside of the locker connecting portion 28 formed on the top surface of the top plate 20. The locker 74 includes a body portion 74, a press button portion 76, a pair of hooking portions 77, and rotation axes 78. The body portion 74 is disposed in a space between the top plate 20 and the pocket portion 60. The press button portion 76 expands downward from a side of the body portion 74 and has an end that is exposed to the bottom surface of the top plate 20 through a hole 20a formed on the flat surface of the top plate 20 to operate the locker 74. The pair of hooking portions 77 extend upward from each side of the body portion 75, and have ends which are exposed through the pair of locking slots 72 and are selectively hooked in and unhooked from a hooking groove 1a (referring to FIGS. 3 and 11) which is formed on the bottom surface of the PDA 1. The rotation axes 78 are formed on the press button portion 76 to form a rotation axis of the locker 74.

The body portion 75 simultaneously supports the press button portion 76 and the pair of hooking portions 77 and is angular semicircular. However, the shape of the body portion 75 according to the present invention is not limited to the angular semicircular shape.

The press button portion 76 substantially drives the locker 74. That is, the user can detach the PDA 1 from the pocket portion 60 by pressing the press button portion 76. The press button portion 76 is arc-shaped so that the pair of hooking portions 76 can pivot inside of the pair of locking slots 72 when the press button portion 76 is pressed in a direction of the flat surface of the top plate 20. Also, antiskid steps are formed on a surface where the end of the press button portion 76 is exposed.

The pair of hooking portions 77 protrudes upward from each end of the body portion 75. As described above, the pair of hooking portions 77 pass through the hole 20a formed on the flat surface of the top plate, extrude inside of the pocket portion 60, and selectively are hooked in and unhooked from the hooking groove 1a (referring to FIGS. 3 and 11) formed on the bottom surface of the PDA 1. Slopes 77a which slant in a direction in which the PDA 1 is connected to the pocket portion 60 are formed on each end of the pair of the hooking portions 77. The PDA 1 is easily connected to the pocket portion 60 by the slopes 77a.

The rotation axes 78 protrude from each side of the press button portion 76 in a direction opposite to each other. The axes 78 are accommodatingly supported inside of an axis accommodating portion 28a in the locker connecting portion 28, and then fixed by an additional bolt (not shown) to form a rotation axis of the locker 74.

An elastic member 79, which elastically biases the locker 74 in a direction in which the locker 74 is reverted to the original location when the press button portion 76 is released, is provided between the body portion 75 and the locker connecting portion 28. The elastic member 79 has ends which are respectively fixed into a groove 28b formed on the bottom surface of the locker connecting portion 28 and a groove 75a formed on the bottom surface of the body portion 75 such that both ends are partly accommodated in these grooves 28b and 75a.

While the PDA 1 is being mounted in the pocket portion 60, as illustrated in FIG. 11, if the user presses the press button portion 73 in a direction A, the locker 74 pivots on the rotation axis 78 in a predetermined direction (from a direction of a solid line to a direction of a dotted line) by the pressing force. The pair of hooking portions 77 can be released from the hooking groove 1a formed on the bottom surface of the PDA 1 by the pivoting of the locker 74. When the user releases the press button portion 76, the locker 74 returns to the original position by the elastic resistance force of the elastic member 79 (from a direction of the dotted line to a direction of the solid line).

As such, by a simple operation of user's pressing the press button, the pair of hooking portion 77 can be released from the hooking groove 1a formed on the bottom surface of the PDA 1. However, the press button portion 76 should not be pressed accidentally or intentionally during using the RFID reader because if the press button portion 76 is pressed, the PDA 1 can be detached from the pocket portion 60. To prevent the PDA 1 from being detached from the pocket portion 60 accidentally, a stopper 80 is further included.

As illustrated in FIGS. 8, 10, and 11, the stopper 80, which is connected to the top plate 20 close to the locker 74 and can move in a predetermined direction, selectively restricts the movement of the locker 74.

The stopper 80 includes a stopper body 81, and a stopper rod 82. The stopper body 81 is selectively located on the bottom surface of the body portion 75 of the locker 74 and restricts the movement of the locker 74 while moving in a direction of the flat surface of the top plate 20. The stopper rod 82 extends downward from the stopper body 81, is exposed through a penetration hole 20b formed on the bottom surface of the top plate 20, and operates the stopper body 81.

Projection portions 81a, which are selectively disposed to face a step projection portion 75b formed on the body portion 75 of the locker 74, are formed on the stopper body 81. Substantially, the movement of the locker 74 is restricted by the projection portions 81a disposed facing the step projection portion 75b. For example, as illustrated in FIG. 11, if the stopper 80 moves in a direction B, the movement of the locker 74 is restricted when, as illustrated by the solid line, the projection portions 81a are disposed facing the step projection portion 75b, and when the stopper 80 moves in a direction of the dotted line and consequently, the projection portions 81a are released from the step projection portion 75b, the locker 74 can move freely.

With only the described-above structure of the locking portion 70, the PDA 1 can be sufficiently locked into and unlocked from the pocket portion 60. However, in some cases, the connection between the PDA 1 and the pocket portion 60 may be rather weak.

To supplement the connection strength between the PDA 1 and the pocket portion 60, elastic projection portions 90 (referring to FIG. 5) are further included in the pocket portion 60. Each of the elastic projection portion 90 is connected to an inner wall of the pocket portion 60 and is elastically hooked in and unhooked from a groove 1b (referring to FIG. 3) formed on a side wall of the PDA 1. That is, the elastic projection portion 90 supports the PDA 1 inside the pocket portion 60, together with the locking portion 70.

The elastic projection portion 90 includes a projection supporting plate 91, a leaf spring bending portion 92, and an elastic projection 93. The projection supporting plate 91 is connected to the inner wall of the pocket portion 60. The leaf spring bending portion 92 is formed on the projection supporting plate 91 while being bent from the projection supporting plate 91 with one of its ends open, and is elastically movable in a horizontal direction with respect to a direction in which the PDA 1 is mounted in the pocket portion 60. The elastic projection 93 is formed to protrude from the leaf spring bending portion 92 toward the inside of the pocket portion 60 and is selectively inserted into the groove 1b formed a side wall of the PDA 1.

The elastic projection portion 90 is inserted into a facing projection fixing hole 60a formed each inner wall of the pocket portion 60. However, the elastic projection portion 90 of the present invention is not limited thereto, and the elastic projection portion 90 may be integrally formed on the inner wall of the pocket portion 60.

When the PDA 1 is mounted in the pocket portion 60, the hooking groove 1a of the PDA 1 is hooked in the hooking portions 77 of the locker 74, and at the same time, the elastic projection 91 is inserted into the groove 1b formed on the side wall of the PDA 1. That is, when the PDA 1 is inserted into the pocket portion 60, the leaf spring bending portion 92 is pushed backwards with respect to the projection supporting plate 91, and then when the groove 92 reaches an area of the elastic projection 93, the leaf spring bending portion 92 protrudes to an original position with respect to the projection supporting plate 91, so that the elastic projection 93 can be connected with the groove 1b.

Operation of the RFID reader having the configuration described above will be briefly described below.

The PDA 1 is pushed into the pocket portion 60 while being partly accommodated in the pocket portion 60 in order to be mounted in the pocket portion 60. Then, the locker 74 is pushed in a predetermined direction with respect to the rotation axes 78, and finally the pair of hooking portions 77 are hooked in the hooking groove 1a formed on the bottom surface of the PDA 1. At the same time, the leaf spring bending portion 92 pushed backwards with respect to the projection supporting plate 91 protrudes forwards and thus the elastic projection 93 can be connected with the groove 1b formed on the side of the PDA 1.

While the PDA 1 is mounted in the pocket portion 60, the user holds the grip portion 35 and then places the RFID reading portion 40 close to a RFID tag (referring to FIG. 4) to be read. Then, the user presses the press button portion 38b on the switching unit 38 with a user's finger. Accordingly, the press button portion 38b pivots on the pivot axis 38a and operates the module operating portion 38c, which operates the RFID module 42, and the RFID module 42 reads information in the RFID tag to be read. The read result is transmitted to the auxiliary PCB 44 through the main PCB 43, and then is output and stored to a display of the PDA 1 through the connection terminal portion 63. Through these procedures, a variety of management systems are performed.

Once the user finishes using the RFID reader, as illustrated in FIG. 11, the user presses the press button portion 76 in a direction A in order to detach the PDA 1 from the pocket portion 60. Then, by the pressing force, the locker 74 rotates with respect to the rotation axes 78 in a predetermined direction (from a direction of a solid line to a direction of a dotted line). The rotation of the locker 74 enables the pair of hooking portions 77 to be released from the hooking groove 1 a formed on the bottom surface of the PDA 1. In this state, the user can pull out the PDA 1 from the pocket portion 60. Afterwards, when the user releases the press button portion 76, the locker 74 returns to its original position by the elastic resistant force of the elastic member 79 (from a direction of the dotted line to a direction of the solid line).

As described above, according to the embodiment of the present invention, an RFID reader can be used while a mobile terminal such as a PDA is mounted in it, have an effective structure, and also be portable and easy to use. Thus, a user can perform various management systems effectively no matter when and no matter where the user wants.

In addition, according to the embodiment of the present invention, a mobile terminal such as a PDA can be easily locked in and unlocked from a pocket portion without any difficulties.

While the present invention has been particularly shown and described with reference to exemplary embodiments thereof, it will be understood by those of ordinary skill in the art that various changes in form and details may be made therein without departing from the scope of the present invention as defined by the following claims.

### Industrial Applicability

An RFID reader can be used while a mobile terminal such as a PDA is mounted in it, have an efficient structure, and also be portable and easy to use.

Also, a mobile terminal such as a PDA can be easily locked in and unlocked from a pocket portion of an RFID reader without any difficulties.

## Claims

1. A radio frequency identification (RFID) reader on which a mobile terminal can be mounted, the RFID reader comprising:
a reader body (10);
a RFID reading portion (40) which forms a front of the reader body (10) and includes a RFID module (42) which reads information in a RFID tag by being placed close to the RFID tag;
a grip portion (35) which is connected to the reader body (10) in a rear of the RFID reading portion (40), which supports the reader body (10) and to which a switching unit (38) is connected that selectively turns on and off operation of the RFID module (42); and
a control unit which outputs the information of the RFID tag read by the RFID module (42) to the mobile terminal according to operation of the switching unit (38);
said reader body (10) which includes a top plate (20) to which a pocket portion (60) is detachably connected to, having an end to which a top of the grip portion (35) is connected to and which is flat,
**characterized by**
said pocket portion (60) being connected to a top of the reader body (10) and includes a connection terminal portion (63) which is connectable with a terminal portion of the mobile terminal and is formed on an inner side of the pocket portion (60); and
a locking portion (70) which is provided in at least one of the top plate (20) and the pocket portion (60) and selectively locks and unlocks the mobile terminal in and from the pocket portion (60) wherein the locking portion (70) includes at least one locking slot (72) which is formed at the pocket portion (60), and a locker (74) which is provided in a manner that the locker (74) can pivot in at least one direction, said locker (74) having an end that passes through the locking slot (72) and is exposed to the inside of the pocket portion (60).

2. The RFID reader of claim 1, wherein the reader body (10) includes a front plate (30) which forms a front surface of the RFID reading portion (40) and is curved; wherein a module supporting cover (41) that accommodatingly supports the RFID module (42) is detachably coupled with a rear surface of the front plate (30); further comprising an arc-shaped connection portion (50) which has an end that is connected between the front plate (30) and the module supporting cover (41) and another end that is connected to the lower part of the pocket portion (60) to form a lower part of the reader body (10);
wherein an auxiliary printed circuit board PCB (44) where the connection terminal portion (63) is connected and a connection PCB (45) apart from the auxiliary PCB (44) are provided in the pocket portion (60), a main PCB (43) is provided in the RFID module (42) and each of the main PCB (43), the connection PCB (45) and the auxiliary PCB (44) is electrically connected to a flexible printed circuit board (FPCB).

3. The RFID reader of claim 2, wherein the connection terminal portion (63) includes a plurality of pogo pins (64) which are connected on the auxiliary PCB (44) to correspond to a terminal portion formed on the mobile terminal and a pin supporting block which all the plurality of pogo pins (64) on the auxiliary PCB (44);
wherein each of the plurality of pogo pins includes a pin accommodating portion (64b) which has an end that is connected to the auxiliary PCB (44), another end that protrudes along a horizontal direction of a surface of the auxiliary PCB (44), and an exposing hole (64a) formed on an exposed end, a pin (64c) which is partly accommodated in the pin accommodating portion (64b) in order that its end is exposed to the outside through the exposing hole (64a), an elastic member (64d) which is provided in the pin accommodating portion (64b), has two ends disposed between the auxiliary PCB (44) and the pin (64c) and elastically biases the pin (64c) in a direction in which the pin (64c) is exposed from the pin accommodating portion (64b), and a detachment preventing portion which is provided to an end of the pin (64c) that contacts the elastic member (64c) and is formed to be greater than an inner diameter of the exposing hole (64a) in order to prevent the pin (64c) from being released from the exposing hole (64a).

4. The RFID reader of claim 2. wherein the auxiliary PCB (44) has a power supplying terminal portion (44a) and a universal serial bus (USB) terminal portion (44b) connected thereto and the power supplying terminal portion (44a) and the USB terminal portion (44b) are respectively exposed through first and second terminal exposing holes (23a, 23b);
wherein on a bottom surface of the top plate (20) on which the first and second terminal exposing holes (23a, 23b) are formed, a terminal cover (25) that pivots on a hinge portion (25a) to open and close a side of the top plate (20);
wherein a stop-knob (26) which is provided on the bottom surface of the top plate (20) and selectively restricts the pivoting of the terminal cover (25).

5. The RFID reader of claim 1, wherein the switching unit (38) includes a press button portion (38b), which is exposed from a side of the grip portion (35) and pivots on a pivot axis (38a) on a side of the press button portion (38b), a module operating portion (38c), which operates the RFID module (42) according to the pivoting of the press button portion (38b), and a reverting spring (38d), which is connected to the press button portion (38b), and returns the press button portion (38b) to an original position.

6. The RFID reader of claim 1, further comprising:
a changeable battery (36) which is included inside the grip portion (35) and supplies power to the RFID module (42); and
a connection ring (51) which is formed on at least one of the reader body (10) and the grip portion (35);
wherein the mobile terminal is an industrial personal digital assistant.

7. The RFID reader of claim 1, wherein the locker (74) includes a body portion (75) which is disposed in a space between the top plate (20) and the pocket portion (60), a press button portion (76) which extends downwards from a side of the body portion (75) and has an end that is exposed to the bottom of the top plate (20) through a hole (20a) formed on a surface of the top plate (20), a pair of hooking portions (77) which extends upwards from each side of the body portion (75) and has an end that is exposed through the pair of the locking slots (72) to be selectively locked in and unlocked from a hooking groove (1a) formed on the bottom of
the mobile terminal, and rotation axes (78) that are formed on at least one of the body portion (75) and the press button portion (76) to form a rotation axis of the locker (74).

8. The RFID reader of claim 7, wherein the locker (74) is connected to a locker connection portion (28) formed on a top surface of the top plate (20), the rotation axes (78) protrude outwards from each side of the press button portion (76) and are accommodated and supported by an axis accommodating portion (28a) formed inside of the locker connecting portion (28) and an elastic member (79) elastically biases the locker (74) in a direction in which the locker (74) returns to an original position when the press button portion (76) is released.

9. The RFID reader of claim 7, wherein the press button portion (76) is arc-shaped so that the pair of hooking portions (77) can rotate in the pair of locking slots (72) when the press button portion (76) is pressed in a direction of the flat surface of the press button portion (76) and antiskid steps are formed on the exposed surface of the press button portion (76);
wherein slopes (77a) which slant in a direction in which the mobile terminal is connected to the pocket portion (60) are formed on each end of the pair of the hooking portions (77).

10. The RFID reader of claim 1, further comprising:
a stopper (80) which is connected to the top plate (20) close to the locker (74) and can move in a predetermined direction and selectively restricts the movement of the locker (74);
wherein the stopper (80) includes a stopper body (81) which is selectively located on the bottom surface of the body portion (75) of the locker (74) and restricts the movement of the locker (74) while moving in a direction of the flat surface of the top plate (20) and a stopper rod (82) extends downward from the stopper body (81), is exposed through a penetration hole (20b) formed on the bottom surface of the top plate (20), and operates the stopper body (81).

11. The RFID reader of claim 10, further comprising:
a projection portion (81 a) which is formed on the stopper body (81) and selectively disposed on a step projection portion (75b) formed on the body portion (75) of the locker (74); and
elastic projection portions (90) which are formed on each inner side of the pocket portion (60) and elastically locked in and unlocked from a groove (1 b) formed on a side of the mobile terminal;
wherein the elastic projection portions (90) includes a projection supporting plate (91), which is connected to the inner wall of the pocket portion (60), a leaf spring bending portion (92), which is formed on the projection supporting plate (91) while being bent from the projection supporting plate (91) with one of its ends open, and is elastically movable in a horizontal direction with respect to a direction in which the PDA is mounted in the pocket portion (60), and an elastic projection (93),
which is formed to protrude from the leaf spring bending portion (92) toward the inside of the pocket portion (60) and is selectively inserted into the groove (1b) formed a side wall of the mobile terminal.

12. The RFID reader of claim 1, further comprising:
a gasket (55) which is interposed between the top plate (20) and the pocket portion (60) in order to seal a space between the top plate (20) and the pocket portion (60), is designed as a single unit that wholly covers outlines of the top plate (20) and the pocket portion (60) and an area where the top plate (20) and the pocket portion (60) are coupled together facing each other, and includes projection ribs (55e) which are formed on at least one side of the gasket (55) and inserted and fixed into grooves (22) formed on corresponding parts of the top plate (20).

## Patentansprüche

1. Radiofrequenz-Identifikations(RFID)-Lesegerät, an dem ein mobiles Endgerät anbringbar ist, wobei das RFID-Lesegerät folgendes aufweist:
einen Lesegerätkörper (10),
einen RFID-Leseabschnitt (40), der eine Vorderseite des Lesegerätkörpers (10) bildet und ein RFID-Modul (42) umfasst, welches Information eines RFID-Etiketts ausliest, indem es nahe dem RFID-Etikett platziert wird,
einen Griffabschnitt (35), der mit dem Lesegerätkörper (10) in einem rückseitigen Bereich des RFID-Lesegerätabschnitts (40) verbunden ist, und der den Lesegerätkörper (10) trägt und an dem eine Schalteinheit (38) verbunden ist, die den Betrieb des RFID-Moduls (42) wahlweise ein- und ausschaltet, und
eine Steuerungseinheit, die die Information des RFID-Etiketts, die von dem RFID-Modul (42) ausgelesen wurde, entsprechend dem Betrieb der Schalteinheit (38) an das mobile Endgerät ausgibt, wobei der Lesegerätkörper (10), der eine obere Platte (20) umfasst, an der ein Taschenabschnitt (60) abnehmbar befestigt ist, ein Ende hat, an dem ein oberes Ende des Griffabschnitts (35) befestigt ist und das flach ausgebildet ist,
**dadurch gekennzeichnet, dass**
der Taschenabschnitt (60) mit einem oberen Ende des Lesegerätkörpers (10) verbunden ist und einen Verbindungsanschluss-Abschnitt (63) umfasst, der mit dem Anschlussabschnitt des mobilen Endgeräts verbindbar und an einer Innenseite des Taschenabschnitts (60) gebildet ist, und
ein Verriegelungsabschnitt (70) vorgesehen ist, der sich in der oberen Platte (20) und/oder in dem Taschenabschnitt (60) befindet und das mobile Endgerät in dem Taschenabschnitt (60) wahlweise arretiert und von diesem freigibt, wobei der Verriegelungsabschnitt (70) wenigstens einen Verriegelungsschlitz (72), der in dem Taschenabschnitt (60) gebildet ist, und einen Riegel (74), der derart vorgesehen ist, dass der Riegel (74) in wenigstens einer Richtung schwenkbar ist, umfasst, wobei der Riegel (74) ein Ende hat, das sich durch den Verriegelungsschlitz (72) erstreckt und zur Innenseite des Taschenabschnitts (60) freiliegend angeordnet ist.

2. RFID-Lesegerät nach Anspruch 1, bei dem der Lesegerätkörper (10) eine Vorderplatte (30) umfasst, die eine vordere Fläche des RFID-Leseabschnitts (40) bildet und gebogen ist, und bei dem eine Modul-Halteabdeckung (41), in der das RFID-Modul (42) aufnehmbar befestigt ist, an einer hinteren Fläche der Vorderplatte (30) abnehmbar verbunden ist,
weiterhin aufweisend einen bogenförmigen Verbindungsabschnitt (50), der ein Ende hat, das zwischen der Vorderplatte (30) und der Modul-Halteabdeckung (41) verbunden ist, und ein weiteres Ende hat, das mit dem unteren Teil des Taschenabschnitts (60) verbunden ist, um einen unteren Teil des Lesegerätkörpers (10) zu bilden,
wobei eine Hilfs-Leiterplatte PCB (44), und zwar dort wo der Verbindungsanschluss-Abschnitt (63) verbunden ist, und eine Verbindungs-PCB (45), die von der Hilfs-PCB (44) beabstandet ist, in dem Taschenabschnitt (60) vorgesehen sind, wobei eine Haupt-PCB (43) in dem RFID-Modul (42) vorgesehen sind, und wobei die Haupt-PCB (43), die Verbindungs-PCB (45) und die Hilfs-PCB (44) mit einer flexiblen Leiterplatte (FPCB) elektrisch verbunden sind.

3. RFID-Lesegerät nach Anspruch 2, bei dem der Verbindungsanschluss-Abschnitt (63) eine Vielzahl von Pogo-Pins (64), die an der Hilfs-PCB (44) so angeschlossen sind, dass sie mit einem Anschlussabschnitt, der an dem mobilen Endgerät gebildet ist, korrespondieren, und einen Pin-Halteblock, der die Vielzahl von Pogo-Pins (64) an der Hilfs-PCB (44) hält, umfasst,
wobei jeder Pogo-Pin der Vielzahl von Pogo-Pins einen Pin-Aufnahmeabschnitt (64b) mit einem Ende, das mit der Hilfs-PCB (44) verbunden ist, einem weiteren Ende, das in einer horizontalen Richtung von einer Oberfläche der Hilfs-PCB (44) vorsteht, und einer freiliegenden Öffnung (64a), die an einem freien Ende gebildet ist, einen Pin (64c), der in dem Pin-Aufnahmeabschnitt (64b) derart teilweise aufgenommen ist, dass dessen Ende durch die freiliegende Öffnung (64a) nach außen frei vorsteht, ein elastisches Element (64d), das in dem Pin-Aufnahmeabschnitt (64b) vorgesehen ist, und das mit zwei Enden zwischen der Hilfs-PCB (44) und dem Pin (64c) angeordnet ist und den Pin (64c) in einer Richtung, in der der Pin (64c) von dem Pin-Aufnahmeabschnitt (64b) frei vorsteht, vorspannt, und einen Lösesicherungsabschnitt, der an einem Ende des Pins (64c), der das elastische Element (64d) kontaktiert, vorgesehen ist und der so gebildet ist, dass er größer als ein Innendurchmesser der freiliegenden Öffnung (64a) ist, um zu verhindern, dass sich der Pin (64c) aus der freiliegenden Öffnung (64a) löst, umfasst.

4. RFID-Lesegerät nach Anspruch 2, bei dem die Hilfs-PCB (44) einen Energieversorgungs-Anschlussabschnitt (44a) und einen USB-Anschlussabschnitt (44b), der mit diesem verbunden ist, aufweist, wobei der Energieversorgungs-Anschlussabschnitt (44a) und der USB-Anschlussabschnitt (44b) jeweils durch eine erste bzw. eine zweite Anschluss-Durchgangsöffnung (23a, 23b) freiliegend angeordnet sind,
wobei an einer unteren Fläche der oberen Platte (20), an der die erste und die zweite Anschluss-Durchgangsöffnung (23a, 23b) gebildet sind, eine Anschlussabdeckung (25) vorgesehen ist, die an einem Gelenkabschnitt (25a) schwenkbar ist, um eine Seite der oberen Platte (20) zu öffnen und zu schließen, und
wobei ein Halteknauf (26) an der unteren Fläche der oberen Platte (20) vorgesehen ist und die Schwenkbewegung der Anschlussabdeckung (25) wahlweise unterbindet.

5. RFID-Lesegerät nach Anspruch 1, bei dem die Schalteinheit (38) einen Druckknopfabschnitt (38b), der an einer Seite des Griffabschnitts (35) freiliegend angeordnet ist und um eine Schwenkachse (38a) an einer Seite des Druckknopfabschnitts (38b) schwenkbar ist, einen Modulbetätigungsabschnitt (38c), der das RFID-Modul (42) entsprechend der Verschwenkung des Druckknopfabschnitts (38b) betätigt, und eine Rückstellfeder (38d), die mit dem Druckknopfabschnitt (38b) verbunden ist und den Druckknopfabschnitt (38b) in eine Ausgangsposition zurückbewegt, umfasst.

6. RFID-Lesegerät nach Anspruch 1, weiterhin aufweisend:
eine auswechselbare Batterie (36), die in dem Griffabschnitt (35) vorgesehen ist und das RFID-Module (42) mit Energie versorgt, und
einen Verbindungsring (51), der an dem Lesegerätkörper (10) und/oder an dem Griffabschnitt (35) gebildet ist,
wobei das mobile Endgerät ein industrielles PDA ist.

7. RFID-Lesegerät nach Anspruch 1, bei dem der Riegel (74) einen Rumpfabschnitt (75), der in einem Bereich zwischen der oberen Platte (20) und dem Taschenabschnitt (60) angeordnet ist, einen Druckknopfabschnitt (76), der sich von einer Seite des Rumpfabschnitts (75) in Richtung nach unten erstreckt und ein Ende hat, das zur Unterseite der oberen Platte (20) durch eine Öffnung (20a), die an einer Fläche der oberen Platte (20) gebildet ist, freiliegt, ein Paar Hakenabschnitte (77), das sich von jeder Seite des Rumpfabschnitts (75) in Richtung nach oben erstreckt und ein Ende hat, das durch das Paar Verriegelungsschlitze (72) freiliegend angeordnet ist, um in einer an der Unterseite des mobilen Endgeräts gebildeten Einhaknut (1a) wahlweise arretiert und von dieser gelöst zu werden, und Drehachsen (78), die an dem Rumpfabschnitt (75) und/oder dem Druckknopfabschnitt (76) ausgebildet sind, um eine Rotationsachse des Riegels (74) zu bilden, umfasst.

8. RFID-Lesegerät nach Anspruch 7, bei dem der Riegel (74) mit einem Riegel-Verbindungsabschnitt (28), der an einer oberen Fläche der oberen Platte (20) gebildet ist, verbunden ist, wobei die Drehachsen (78) von jeder Seite des Druckknopfabschnitts (76) in Richtung nach außen vorstehen und in einem Achsen-Aufnahmeabschnitt (28a), der in dem Riegel-Verbindungsabschnitt (28) gebildet ist, aufgenommen sind und von diesem gehalten werden, und wobei ein elastisches Element (79) den Riegel (74) in einer Richtung, in der der Riegel (74) in eine Ausgangsposition zurückkehrt, wenn der Druckknopfabschnitt (76) freigegebnen wird, elastisch vorspannt.

9. RFID-Lesegerät nach Anspruch 7, bei dem der Druckknopfabschnitt (76) bogenförmig ist, so dass sich das Paar Hakenabschnitte (77) in dem Paar Verriegelungsschlitze (72) drehen kann, wenn der Druckknopfabschnitt (76) in einer Richtung der flachen Oberfläche des Druckknopfabschnitts (76) gedrückt wird, und bei dem Antigleitabsätze an der freiliegenden Oberfläche des Druckknopfabschnitts (76) gebildet sind,
wobei Flanken (77a), die in einer Richtung, in der das mobile Endgerät mit dem Taschenabschnitt (60) befestigt ist, geneigt sind, an dem Ende des Hakenabschnitts-Paares (77) gebildet sind.

10. RFID-Lesegerät nach Anspruch 1, weiterhin aufweisend:
einen Anschlag (80), der an der oberen Platte (20) nahe dem Riegel (74) verbunden ist, der in einer vorbestimmten Richtung bewegbar ist und wahlweise die Bewegung des Riegels (74) unterbindet,
wobei der Anschlag (80) einen Anschlagkörper (81), der wahlweise an der unteren Fläche des Rumpfabschnitts (75) des Riegels (74) angeordnet ist und die Bewegung des Riegels (74) unterbindet während er sich in einer Richtung der flachen Oberfläche der oberen Platte (20) bewegt, und eine Anschlagstange (82), die sich von dem Anschlagkörper (81) in Richtung nach unten erstreckt und durch eine Durchgangsöffnung (20b), die an der unteren Seite der oberen Platte (20) gebildet ist, freiliegend angeordnet ist und den Anschlagkörper (81) betätigt, umfasst.

11. RFID-Lesegerät nach Anspruch 10, weiterhin aufweisend:
einen Vorsprungsabschnitt (81 a), der an dem Anschlagkörper (81) gebildet ist und der wahlweise an einem Stufenvorsprungsabschnitt (75b), der an dem Rumpfabschnitt (75) des Riegels (74) gebildet ist, anordenbar ist, und
elastische Vorsprungsabschnitte (90), die an jeder inneren Seite des Taschenabschnitts (60) gebildet sind und in einer Nut (1 b), die an einer Seite des mobilen Endgeräts gebildet ist, elastisch arretierbar und von dieser lösbar sind,
wobei die elastischen Vorsprungsabschnitte (90) eine Vorsprung-Halteplatte (91), die an der inneren Wand des Taschenabschnitts (60) befestigt ist, einen Blattfederbiegeabschnitt (92), der an der Vorsprung-Halteplatte (91) so gebildet ist, dass er sich mit einem seiner Enden offen von der Vorsprung-Halteplatte (91) weg biegt und in einer horizontalen Richtung bezüglich einer Richtung , in der das PDA in dem Taschenabschnitt (60) befestigt wird, elastisch bewegbar ist, und einen elastischen Vorsprung (93), der so gebildet ist, dass er von dem Blattfederbiegeabschnitt (92) in Richtung Innenseite des Taschenabschnitts (60) vorsteht und wahlweise in die Nut (1 b), die an einer Seitenwand des mobilen Endgeräts gebildet ist, einsetzbar ist, umfasst.

12. RFID-Lesegerät nach Anspruch 1, weiterhin aufweisend:
eine Dichtung (55), die zwischen der oberen Platte (20) und dem Taschenabschnitt (60) angeordnet ist, um einen Bereich zwischen der oberen Platte (20) und dem Taschenabschnitt (60) abzudichten, die als eine einstückige Einheit gebildet ist, die die Umrisse der oberen Platte (20) und des Taschenabschnitts (60) sowie einen Bereich, in dem die obere Platte (20) und der Taschenabschnitt (60) einander zugewandt miteinander verbunden sind, vollständig abdeckt, und die Vorsprungsrippen (55e) umfasst, die an wenigstens einer Seite der Dichtung (55) gebildet sind und in Nuten (22), die an entsprechenden Abschnitten der oberen Platte (20) gebildet sind, einsetzbar und fixierbar sind.

## Revendications

1. Lecteur d'identification par radiofréquence (RFID) sur lequel un terminal mobile peut être monté, le lecteur RFID comprenant :
un corps de lecteur (10) ;
une portion de lecture RFID (40) qui forme un avant du corps de lecteur (10) et inclut un module RFID (42) qui lit des informations dans une étiquette RFID en étant placé près de l'étiquette RFID ;
une portion de prise (35) qui est reliée au corps de lecteur (10) dans un arrière de la portion de lecture RFID (40), qui supporte le corps de lecteur (10) et à laquelle est reliée une unité de commutation (38) qui met en marche et arrête sélectivement le fonctionnement du module RFID (42) ; et
une unité de commande qui transmet les informations de l'étiquette RFID lues par le module RFID (42) au terminal mobile en fonction du fonctionnement de l'unité de commutation (38) ;
ledit corps de lecteur (10) qui inclut une plaque supérieure (20) à laquelle une portion de poche (60) est reliée de manière détachable, ayant une extrémité à laquelle un dessus de la portion de prise (35) est reliée et qui est plate,
**caractérisé en ce que**
ladite portion de poche (60) est reliée à un dessus du corps de lecteur (10) et inclut une portion de borne de connexion (63) qui peut être connectée à une portion de borne du terminal mobile et est formée sur un côté intérieur de la portion de poche (60) ; et
une portion de verrouillage (70) qui est fournie dans au moins une parmi la plaque supérieure (20) et la portion de poche (60) et verrouille sélectivement le terminal mobile dans la portion de poche (60) et le déverrouille de celle-ci, dans lequel la portion de verrouillage (70) inclut au moins une fente de verrouillage (72) qui est formée sur la portion de poche (60), et un élément de verrouillage (74) qui est fourni de manière à ce que l'élément de verrouillage (74) puisse pivoter selon au moins une direction, ledit élément de verrouillage (74) ayant une extrémité qui passe à travers la fente de verrouillage (72) et est exposée à l'intérieur de la portion de poche (60).

2. Lecteur RFID selon la revendication 1, dans lequel le corps de lecteur (10) inclut une plaque frontale (30) qui forme une surface frontale de la portion de lecture RFID (40) et est incurvée ;
dans lequel un couvercle de support de module (41) qui supporte le module RFID (42) de manière réceptrice est couplé de manière détachable à une surface arrière de la plaque frontale (30) ;
comprenant en outre une portion de liaison arquée (50) qui a une extrémité qui est reliée entre la plaque frontale (30) et le couvercle de support de module (41) et une autre extrémité qui est reliée à la partie inférieure de la portion de poche (60) pour former une partie inférieure du corps de lecteur (10) ;
dans lequel une carte à circuit imprimé auxiliaire PCB (44) où la portion de borne de connexion (63) est connectée et une PCB de connexion (45) séparée de la PCB auxiliaire (44) sont fournies dans la portion de poche (60), une PCB principale (43) est fournie dans le module RFID (42) et chacune parmi la PCB principale (43), la PCB de connexion (45) et la PCB auxiliaire (44) est électriquement connectée à une carte à circuit imprimé souple (FPCB).

3. Lecteur RFID selon la revendication 2, dans lequel la portion de borne de connexion (63) inclut une pluralité de broches pogo (64) qui sont connectées sur la PCB auxiliaire (44) pour correspondre à une portion de borne formée sur le terminal mobile et un bloc de support de broches lequel supporte toute la pluralité de broches pogo (64) sur la PCB auxiliaire (44) ;
dans lequel chacune de la pluralité de broches pogo inclut une portion de réception de broche (64b) qui a une extrémité qui est connectée à la PCB auxiliaire (44), une autre extrémité qui fait saillie le long d'une direction horizontale d'une surface de la PCB auxiliaire (44), et un trou d'exposition (64a) formé sur une extrémité exposée, une broche (64c) qui est partiellement reçue dans la portion de réception de broche (64b) afin que son extrémité soit exposée à l'extérieur à travers le trou d'exposition (64a), un élément élastique (64d) qui est fourni dans la portion de réception de broche (64b), a deux extrémités disposées entre la PCB auxiliaire (44) et la broche (64c) et sollicite élastiquement la broche (64c) dans une direction dans laquelle la broche (64c) est exposée à partir de la portion de réception de broche (64b), et une portion de prévention de détachement qui est fournie à une extrémité de la broche (64c) qui est en contact avec l'élément élastique (64c) et est formée pour être plus grande qu'un diamètre intérieur du trou d'exposition (64a) afin d'empêcher la broche (64c) d'être libérée à partir du trou d'exposition (64a).

4. Lecteur RFID selon la revendication 2, dans lequel la PCB auxiliaire (44) a une portion de borne d'alimentation en courant (44a) et une portion de borne de bus série universel (USB) (44b) connectée à celle-ci et la portion de borne d'alimentation en courant (44a) et la portion de borne USB (44b) sont respectivement exposées à travers de premier et second trous d'exposition de borne (23a, 23b) ;
dans lequel sur une surface inférieure de la plaque supérieure (20) sur laquelle les premier et second trous d'exposition de borne (23a, 23b) sont formés, un couvercle de borne (25) qui pivote sur une portion de charnière (25a) pour ouvrir et fermer un côté de la plaque supérieure (20) ;
dans lequel un bouton d'arrêt (26) qui est fourni sur la surface inférieure de la plaque supérieure (20) et restreint sélectivement le pivotement du couvercle de borne (25).

5. Lecteur RFID selon la revendication 1, dans lequel l'unité de commutation (38) inclut une portion de bouton-poussoir (38b), qui est exposée à partir d'un côté de la portion de prise (35) et pivote sur un axe de pivotement (38a) sur un côté de la portion de bouton-poussoir (38b), une portion d'actionnement de module (38c), qui actionne le module RFID (42) en fonction du pivotement de la portion de bouton-poussoir (38b), et un ressort de retour (38d), qui est relié à la portion de bouton-poussoir (38b), et ramène la portion de bouton-poussoir (38b) à une position d'origine.

6. Lecteur RFID selon la revendication 1, comprenant en outre :
une batterie remplaçable (36) qui est incluse à l'intérieur de la portion de prise (35) et fournit du courant au module RFID (42) ; et
une bague de connexion (51) qui est formée sur au moins un parmi le corps de lecteur (10) et la portion de prise (35) ;
dans lequel le terminal mobile est un assistant numérique personnel industriel.

7. Lecteur RFID selon la revendication 1, dans lequel l'élément de verrouillage (74) inclut une portion de corps (75) qui est disposée dans un espace entre la plaque supérieure (20) et la portion de poche (60), une portion de bouton-poussoir (76) qui s'étend vers le bas à partir d'un côté de la portion de corps (75) et a une extrémité qui est exposée au dessous de la plaque supérieure (20) à travers un trou (20a) formé sur une surface de la plaque supérieure (20), une paire de portions d'accrochage (77) qui s'étendent vers le haut à partir de chaque côté de la portion de corps (75) et a une extrémité qui est exposée à travers la paire de fentes de verrouillage (72) pour être sélectivement verrouillées dans une rainure d'accrochage (1a) formée sur le dessous du terminal mobile et être déverrouillées de celle-ci, et des axes de rotation (78) qui sont formés sur au moins une parmi la portion de corps (75) et la portion de bouton-poussoir (76) pour former un axe de rotation de l'élément de verrouillage (74).

8. Lecteur RFID selon la revendication 7, dans lequel l'élément de verrouillage (74) est relié à une portion de connexion d'élément de verrouillage (28) formée sur une surface supérieure de la plaque supérieure (20), les axes de rotation (78) font saillie vers l'extérieur depuis chaque côté de la portion de bouton-poussoir (76) et sont reçus et supportés par une portion de réception d'axe (28a) formée à l'intérieur de la portion de connexion d'élément de verrouillage (28) et un élément élastique (79) sollicite élastiquement l'élément de verrouillage (74) dans une direction dans laquelle l'élément de verrouillage (74) retourne à une position d'origine lorsque la portion de bouton-poussoir (76) est libérée.

9. Lecteur RFID selon la revendication 7, dans lequel la portion de bouton-poussoir (76) est arquée de telle sorte que la paire de portions d'accrochage (77) puisse tourner dans la paire de fentes de verrouillage (72) lorsque la portion de bouton-poussoir (76) est poussée dans une direction de la surface plane de la portion de bouton-poussoir (76) et des gradins antidérapants sont formés sur la surface exposée de la portion de bouton-poussoir (76) ;
dans lequel des pentes (77a) qui s'inclinent dans une direction dans laquelle le terminal mobile est relié à la portion de poche (60) sont formées sur chaque extrémité de la paire de portions d'accrochage (77).

10. Lecteur RFID selon la revendication 1, comprenant en outre :
une butée (80) qui est reliée à la plaque supérieure (20) près de l'élément de verrouillage (74) et peut se déplacer dans une direction prédéterminée et restreint sélectivement le mouvement de l'élément de verrouillage (74) ;
dans lequel la butée (80) inclut un corps de butée (81) qui est sélectivement situé sur la surface inférieure de la portion de corps (75) de l'élément de verrouillage (74) et restreint le mouvement de l'élément de verrouillage (74) tout en se déplaçant dans une direction de la surface plane de la plaque supérieure (20) et une tige de butée (82) s'étend vers le bas à partir du corps de butée (81), est exposée à travers un trou de pénétration (20b) formé sur la surface inférieure de la plaque supérieure (20), et actionne le corps de butée (81).

11. Lecteur RFID selon la revendication 10, comprenant en outre :
une portion de saillie (81a) qui est formée sur le corps de butée (81) et est disposée sélectivement sur une portion de saillie en gradin (75b) formée sur la portion de corps (75) de l'élément de verrouillage (74) ; et
des portions de saillie élastiques (90) qui sont formées sur chaque côté intérieur de la portion de poche (60) et élastiquement verrouillées dans une rainure (1b) formée sur un côté du terminal mobile et déverrouillées de celle-ci ;
dans lequel les portions de saillie élastiques (90) incluent une plaque de support de saillie (91), qui est reliée à la paroi intérieure de la portion de poche (60), une portion de flexion de ressort à lames (92), qui est formée sur la plaque de support de saillie (91) tout en étant pliée à partir de la plaque de support de saillie (91) avec l'une de ses extrémités ouverte, et est élastiquement mobile dans une direction horizontale par rapport à une direction dans laquelle le PDA est monté dans la portion de poche (60), et une saillie élastique (93), qui est formée pour faire saillie à partir de la portion de flexion de ressort à lames (92) vers l'intérieur de la portion de poche (60) et est sélectivement insérée dans la rainure (1b) formée dans une paroi latérale du terminal mobile.

12. Lecteur RFID selon la revendication 1, comprenant en outre :
une garniture (55) qui est interposée entre la plaque supérieure (20) et la portion de poche (60) afin de rendre un espace étanche entre la plaque supérieure (20) et la portion de poche (60), est conçue comme une unité d'un seul tenant qui couvre entièrement des contours de la plaque supérieure (20) et de la portion de poche (60) et une zone où la plaque supérieure (20) et la portion de poche (60) sont couplées ensemble l'une en face de l'autre, et inclut des nervures de saillie (55e) qui sont formées sur au moins un côté de la garniture (55) et insérées et fixées dans des rainures (22) formées sur des parties correspondantes de la plaque supérieure (20).
